# EUROPEAN PATENT APPLICATION

(11) **EP 3 890 183 A1**
(43) Date of publication of application: **06.10.2021**
(21) Application number: 20382252.3
(22) Date of filing: 31.03.2020
(51) Int. Cl.: H02S 20/32, F24S 30/425, F24S 25/12

(54) **SOLAR TRACKING DEVICE INTENDED TO BE INSTALLED IN TWO PARALLEL ROWS OF PHOTOVOLTAIC MODULES**

(71) Applicant: Soluciones Técnicas Integrales Norland S. L., 31008 Pamplona (Navarra) (ES)
(72) Inventor: GARCÍA COLOMO, Iñigo, 31008 Pamplona (NAVARRA) (ES); MORIANA GARCÍA, Iñaki, 31008 Pamplona (NAVARRA) (ES); JIMÉNEZ ROMERO, Sergio, 31008 Pamplona (NAVARRA) (ES)
(74) Representative: Pons

(57) **Abstract**

A solar tracking device intended for being installed in two parallel rows (2,3) of serially-arranged photovoltaic modules (15), wherein said device comprises a first beam (1) supporting a first row (2) of photovoltaic modules (15) which are firmly attached to said first beam (1) which is in turn operatively coupled to a motor (4) for rotating the first beam (1), a first arm (5) attached in a perpendicular manner to the first beam (1), a connecting rod (6) attached in a perpendicular manner to the first arm (5), a second arm (7) coupled in a perpendicular manner to the connecting rod (6), wherein said second arm (7) is in turn coupled in a perpendicular manner to a second beam (8) supporting a second row (3) of photovoltaic panels (15), and a control element (9) operatively communicated with the motor (4) and firmly anchored to the first beam (1), thereby allowing the solar tracking of both rows (2,3) to be controlled in a simultaneous manner.

## Description

### OBJECT OF THE INVENTION

The present invention relates to the field of solar module control devices, and more particularly to devices for the simultaneous solar tracking of two rows of photovoltaic modules on the longitudinal axis of rotation thereof. More specifically, the present invention relates to a control device comprising a mechanism especially adapted on two beams supporting two rows of serially-arranged photovoltaic modules and a control element anchored to one of the beams, which allows the precise control of the inclination of both rows of photovoltaic panels by means of using a single electric motor.

### BACKGROUND OF THE INVENTION

Many solar tracking and control systems are known in the state of the art.

Nevertheless, the known systems and devices comprise at least one motor for each row of photovoltaic modules adapted for rotating about their longitudinal axis and/or have many mechanical parts, reducing their reliability, durability, and performance.

### DESCRIPTION OF THE INVENTION

The present invention intends to solve some of the problems mentioned in the state of the art. More particularly, the present invention describes a solar tracking device intended for being installed in two parallel rows of serially-arranged photovoltaic modules, wherein said device comprises:
- a first beam supporting a first row of photovoltaic modules which are firmly attached to said first beam which is in turn operatively coupled to a motor adapted for rotating the first beam about a longitudinal axis,
- a first arm attached in a perpendicular manner to the first beam,
- a connecting rod attached in a perpendicular manner to the first arm,
- a second arm coupled in a perpendicular manner to the connecting rod, wherein said second arm is in turn coupled in a perpendicular manner to a second beam supporting a second row of photovoltaic panels,
- a control module comprising an inclinometer, said control element being operatively communicated with the motor and firmly anchored to any of the beams, thereby allowing the solar tracking of both rows of photovoltaic modules to be controlled in a precise and simultaneous manner.

The device is therefore capable of controlling the tracking of the two rows of photovoltaic modules simultaneously using only one motor, reducing moving parts with the subsequent wear and tear and increasing mechanical reliability.

Preferably, the connecting rod comprises a hook which in turn comprises two projections, wherein a first projection is attached to the first arm and a second projection is attached to a third arm.

Said third arm can be on the opposite side with respect to the first arm and the motor can be arranged in between both arms, thereby assuring a greater rigidity and mechanical reliability.

Preferably, the control element is protected by a plastic casing in which an electronic PCB and a system for powering same are housed.

Said casing is preferably anchored to the first beam, such that it rotates therewith, being capable of obtaining the position of the system at all times as a result of the inclinometer.

Furthermore said inclinometer preferably has a precision of 0.01 degrees or less.

The control element can be provided with an algorithm implemented for astronomical type-solar tracking for calculating the position of the sun at any time of the year, orienting the modules such that they maximize the direct radiation received in the E-W axis.

The beams can be oriented in the North-South axis and the device performs solar tracking in the E-W axis, being oriented towards the east in the early hours of the day and ending up facing the west in the last few hours.

In addition to this EW tracking algorithm, it can have a smart backtracking algorithm the function of which is to limit the rotation of the rows of photovoltaic modules to the first hours and last hours of the day, such that the device is only capable of moving up to/being oriented at its ideal position in the event that no shadows are cast on the parallel row. According to the sun, it will attain more height and the angle of inclination of the panels will become closer to their target position throughout the morning/afternoon, thereby eliminating possible losses due to shadowing.

Many tracking devices such as those described above can be found in a solar power plant, each of them being installed in parallel rows of two, where each of the control elements of each device are communicated with one another and with a centralized control element, creating a meshed network configured for maximizing solar energy production.

Additionally, the control module can have integrated therein a Bluetooth module allowing access of maintenance technicians to perform movements and other actions manually on the equipment.

The control module can be powered by batteries which are in turn powered by a photovoltaic module dedicated for such purpose.

Accordingly, the control module can be adapted for accepting batteries of three different chemistries (LI-Ion, LiFePO4, and Lead-Acid).

The charging/discharging of the battery can be managed taking into account the radiation and power that the module is generating and the consumption taking place in the motor. When the powering solution is a battery, the battery is arranged inside the equipment, reducing wiring external to the casing.

Alternatively, the control module can also be directly powered from the mains electricity.

### DESCRIPTION OF THE DRAWINGS

To complement the description that is being made and for the purpose of helping to better understand the features of the invention according to a preferred practical embodiment thereof, a set of drawings is attached as an integral part of said description in which the following is depicted in an illustrative and non-limiting manner:

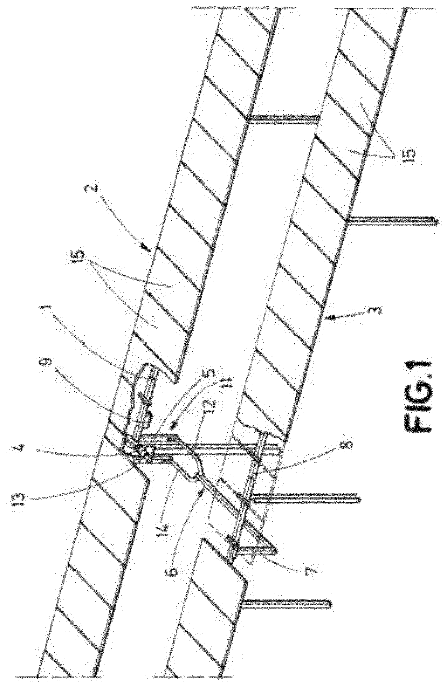

Figure 1 shows an exploded perspective view of a preferred embodiment of the invention, where the solar tracker installed in two parallel rows of serially-arranged photovoltaic modules is shown.

### PREFERRED EMBODIMENT OF THE INVENTION

Figure 1 shows a perspective view of the preferred embodiment of the solar tracking device intended for being installed in two parallel rows (2,3) of serially-arranged photovoltaic modules (15).

More particularly, as shown in Figure 1, the device comprises a first beam (1) supporting a first row (2) of photovoltaic modules (15) which are firmly attached to said first beam (1) which is in turn operatively coupled to a motor (4) for rotating the first beam (1) about a longitudinal axis.

Furthermore, the device has a first arm (5) attached in a perpendicular manner to the first beam (1), and a connecting rod (6) attached in a perpendicular manner to the first arm (5).

In the preferred embodiment, the connecting rod (6) comprises a hook (11) which in turn comprises two projections (12,14), wherein a first projection (12) is attached to the first arm (5) and a second projection is attached to a third arm (13), thereby providing the mechanism with greater mechanical reliability and rigidity.

As shown in Figure 1, the device comprises a second arm (7) coupled in a perpendicular manner to the connecting rod (6), wherein said second arm (7) is in turn coupled in a perpendicular manner to a second beam (8) supporting a second row (3) of photovoltaic panels (3).

Finally, the device further comprises a control element (9) in turn comprising an inclinometer, said control module (9) being operatively communicated with the motor (4) and firmly anchored to any of the beams (1,8), thereby allowing the solar tracking of both rows (2,3) of photovoltaic modules (15) to be controlled in a precise and simultaneous manner.

The device is therefore capable of controlling the tracking of the two rows of photovoltaic modules (15) simultaneously using only one motor (4), reducing moving parts with the subsequent wear and tear and increasing mechanical reliability.

Likewise, the control module (8) can be powered by batteries which are in turn powered by a photovoltaic module dedicated for such purpose.

## Claims

1. A solar tracking device intended for being installed in two parallel rows (2,3) of serially-arranged photovoltaic modules (15), wherein said device is **characterized in that** it comprises:
- a first beam (1) supporting a first row (2) of photovoltaic modules (15) which are firmly attached to said first beam (1) which is in turn operatively coupled to a motor (4) adapted for rotating the first beam (1) about a longitudinal axis,
- a first arm (5) attached in a perpendicular manner to the first beam (1),
- a connecting rod (6) attached in a perpendicular manner to the first arm (5),
- a second arm (7) coupled in a perpendicular manner to the connecting rod (6), wherein said second arm (7) is in turn coupled in a perpendicular manner to a second beam (8) supporting a second row (3) of photovoltaic panels (15),
- a control element (9) comprising an inclinometer, said control element (9) being operatively communicated with the motor (4) and firmly anchored to any of the beams (1,8), thereby allowing the solar tracking of both rows (2,3) of photovoltaic modules (15) to be controlled in a precise and simultaneous manner.

2. The solar tracking device according to claim 1, wherein the connecting rod (6) comprises a hook (11) which in turn comprises two projections (12,14), wherein a first projection (12) is attached to the first arm (5) and a second projection is attached to a third arm (13).

3. The solar tracking device according to claim 1, wherein the control element (9) is anchored to the first beam (1).

4. The solar tracking device according to claim 1, wherein the control element (9) is powered by batteries powered by a photovoltaic module dedicated for such purpose.
